# EUROPÄISCHE PATENTSCHRIFT

(11) **EP 2 442 248 B1**
(45) Veröffentlichungstag und Bekanntmachung des Hinweises auf die Patenterteilung: **14.12.2016**
(21) Anmeldenummer: 11184745.5
(22) Anmeldetag: 11.10.2011
(51) Int. Cl.: G06F 17/50

(54) **Kopplungsmethodik für nicht-iterative Co-Simulation**
Coupling method for non-iterative co-simulation
Méthode de couplage pour la co-simulation non-itérative

(30) Priorität: 15.10.2010 AT 17202010
(43) Veröffentlichungstag der Anmeldung: 18.04.2012
(73) Patentinhaber: Kompetenzzentrum - Das virtuelle Fahrzeug Forschungsgesellschaft mbH, 8010 Graz (AT)
(72) Erfinder: Benedikt, Martin, 8130 Frohnleiten (AT); Watzenig, Daniel, 8041 Graz (AT); Bernasch, Jost, 8043 Graz (AT)
(74) Vertreter: Dilg, Haeusler, Schindelmann Patentanwaltsgesellschaft mbH

(56) Entgegenhaltungen:
- BENEDIKT M ET AL: "An Adaptive Coupling Methodology for Fast Time-Domain Distributed Heterogeneous Co-Simulation", 12. April 2010 (2010-04-12), SAE TECHNICAL PAPER SERIES, SOCIETY OF AUTOMOTIVE ENGINEERS, WARRENDALE, PA, US, PAGE(S) 203 - 212, XP009156723, ISSN: 0148-7191 * das ganze Dokument *
- PUNTIGAM W ET AL: "Transient Co-Simulation of Comprehensive Vehicle Models by Time Dependent Coupling", SAE TECHNICAL PAPER SERIES, SOCIETY OF AUTOMOTIVE ENGINEERS, WARRENDALE, PA, US, Bd. 2006-01-1604, 1. April 2006 (2006-04-01), Seiten 263-272, XP009090427, ISSN: 0148-7191
- FRANK FLITZ: "Numerische Verfahren in der Kopplung von Simulationsprogrammen", DIPLOMARBEIT TECHNISCHE UNIVERSITAET BRAUNSCHWEIG,, no. Mtr. Nr. 2726973, 1 October 2008 (2008-10-01), pages I-V, XP003029644,

## Beschreibung

### GEBIET DER ERFINDUNG

Die Erfindung betrifft eine Kopplungsmethodik für nicht-iterative Co-Simulation.

### STAND DER TECHNIK

Um Zeit und Kosten zu sparen ist heute eine domänenspezifische virtuelle Entwicklung in der Industrie Stand der Technik. Dabei werden in jeder Ingenieurs-Disziplin (z.B. Mechanik, Elektronik, etc.) Modelle für die spezifischen Komponenten mit Hilfe spezieller Simulationswerkzeuge entwickelt und für sich simuliert und analysiert. Einflüsse von anderen Systemen werden nur eingeschränkt betrachtet. Die Entwicklung eines Gesamtsystems erfordert allerdings ein Zusammenspiel aller technischer Domänen bzw. aller Komponenten, sodass diese Interaktionen auch auf virtueller Ebene abgebildet werden müssen. Co-Simulation mittels so genannter *multi-rate* und/oder *multi-method* Methoden bietet eine Möglichkeit, um die verteilt modellierten und verteilt simulierten Teilsysteme zusammenzuführen. Hierbei werden die Koppelgrößen zu definierten Zeitpunkten, nach so genannten Makro-Schritten, während der Simulation ausgetauscht.

Die Eigenschaften der verwendeten Simulationswerkzeuge und die Charakteristiken der Modelle der Teilsysteme bestimmen, welcher Kopplungsalgorithmus verwendet werden kann. Iterative Ansätze wie z.B. waveform-relaxation (sogenanntes *strong coupling)* sind aufgrund der zur Verfügung stehenden Schnittstellen der Simulationswerkzeuge meist nicht anwendbar, sodass das gesamte System über eine nicht-iterative Kopplungsstrategie (sogenanntes *weak coupling)* gelöst werden muss. Bei iterativen Ansätzen werden die Teilmodelle mehrmals (iterativ) über den selben Makro-Zeitschritt bis zum Erreichen eines Abbruchkriteriums - z.B. Genauigkeitsanforderung - gelöst und in jeder Iteration die Koppelgrößen ausgetauscht. Bei nicht-iterativen Ansätzen wird jedes Teilmodell genau einmal über den aktuellen Makro-Zeitschritt simuliert, wobei die Simulationen meist nur pausiert werden. Im Falle von internen Schleifen erfordert eine nicht-iterative Methode Extrapolation von Koppelgrößen über den aktuellen Makro-Schritt und führt zu Ungenauigkeiten. Unter Extrapolation ist die Prädiktion von Koppelgrößen über den zu simulierenden Makro-Zeitschritt zu verstehen. Ist eine Energiebetrachtung zwischen Teilsystemen zulässig, so manifestiert sich dieser Fehler als ab- oder zugeführte Energie, verursacht durch die Kopplung. Wie groß der eingebrachte Fehler durch den Kopplungsalgorithmus ist, hängt von der Makro-Schrittweite, den modellierten Teilsystemen und von den verwendeten, unterlagerten numerischen Lösungsalgorithmen der domänenspezifischen Simulationswerkzeuge ab. Prinzipiell dominiert der durch die notwendige Extrapolation der Koppelgrößen eingebrachte Fehler bei größeren Makro-Schrittweiten.

Eine geeignete Makro-Schrittweite beruht meist auf Erfahrungen von Ingenieuren, numerischen Tests oder wird, falls bekannt, an die Systemdynamiken angepasst. Existierende adaptive Ansätze zur Steuerung der Makro-Schrittweite basieren auf Analyse der Kopplungssignale, Systemdynamik oder Fehlerschätzung und reduzieren die Gesamtsimulationszeit, so wie dies in den Arbeiten von M. Trcka (Co-simulation for Performance Prediction of Innovative Integrated Mechanical Energy Systems in Buildings, Thesis (PhD), Eindhoven University of Technology, Eindhoven, The Netherlands) und M. Benedikt (An adaptive Coupling Methodology for Fast Time-Domain Distributed Heterogeneous Co-Simulation, SAE World Conference 2010, Detroit, 2010.) dargestellt ist.

Von besonderem Interesse ist das Stabilitätsverhalten der gesamten Co-Simulation, also das Zusammenspiel aller Teilsysteme infolge notwendiger Extrapolation. Unterschieden wird daher zwischen der Systemstabilität und der Stabilität der unterlagerten numerischen Lösungsalgorithmen. In der Literatur wird gezeigt, dass sich die Extrapolation von Koppelgrößen auf die numerische Stabilität auswirken kann (vergleiche M. Arnold; Multi-Rate Time Integration for Large Scale Multibody System Models, In P. Eberhard, editor, IUTAM Symposium on Multiscale Problems in Multibody System Contacts, pages 1-10. Springer, 2007). In der österreichischen Patentanmeldung A895/2010 wird die Veränderung des dynamischen Verhaltens bewertet und eine Metrik bestimmt, die zu geeigneten Makro-Schrittweiten führen. Aus "Novel Approach for Performance Evaluation of Fast Time-Domain Non-Iterative Co-Simulation", Martin Benedikt, EngOpt2010 2nd Int. Conference on Engineering Optimization, 06. September 2010 (06.09.2010), Seite 98 ist eine Methode zur Bewertung der Performance - in Bezug auf Genauigkeit - bei nicht-iterativer Co-Simulation. Dabei werden die Extrapolations- bzw. Schätzmethoden systemtechnisch modelliert und zur Bewertung herangezogen. Voraussetzung dabei ist eine abstrakte Beschreibung der komplexen gekoppelten Teilsysteme. Diese Vorabinformation (Meta-Info) ermöglicht ein Abschätzen des Einflusses der nicht-iterativen Kopplung in der gesamten Co-Simulation und somit eine Bewertung der Genauigkeit. Unter Vorgabe einer Genauigkeitsgrenze kann auch eine sinnvolle Makro-Schrittweite bestimmt werden.

Weiterhin beschäftigt sich die Diplomarbeit von Frank Flitz, welche eine auf den 27.Oktober 2008 datierte, nicht unterschriebene eidesstattliche Erklärung enthält, mit numerischen Verfahren in der Kopplung von Simulationsprogrammen. Hierbei werden numerische Aspekte der Co-Simulation bezüglich der Konvergenzbewertung und -beschleunigung untersucht. Hinsichtlich der von Zustandsgrößen abhängigen zeitlichen Entwicklung ausgetauschter Größen werden für die sequentielle Kopplung die Interpolation und für die parallele Kopplung die Extrapolation untersucht. Als Anwendungsbeispiele werden drei verschiedene Systeme mit charakteristischen Eigenschaften verwendet. Die vorgestellten Verfahren, Extrapolation, modifiziertes Sekantenverfahren und kombiniertes Verfahren, zeichnen sich aus durch ihre modulare Struktur, die auf Basis der modifikationsfreien Informationsübertragung für jede Austauschgröße eine freie Austauschbarkeit der Verfahren gegeneinander erlaubt.

### KURZDARSTELLUNG DER ERFINDUNG

Eine Aufgabe der Erfindung mag es sein, ein Verfahren für eine nicht-iterative Co-Simulation zu schaffen, welche gegenüber den Verfahren aus dem Stand der Technik eine verbesserte Performance liefert.

Die Aufgabe wird durch ein Verfahren zur Co-Simulation und eine Vorrichtung zur Co-Simulation gemäß den unabhängigen Patentansprüchen gelöst. Weitere Ausführungsbeispiele werden in den abhängigen Patentansprüchen beschrieben.

Gemäß einem beispielhaften Aspekt wird ein Verfahren zur Verminderung des Einflusses des durch notwendige Extrapolation eingebrachten Fehlers für nicht-iterative Co-Simulation geschaffen, wobei in einem ersten Schritt zum aktuellen Kopplungszeitpunkt aus einer Koppelgröße über den vorherigen Makro-Zeitschritt durch ein Extrapolationsverfahren ein geschätztes Signal über den aktuellen Makro-Zeitschritt geschätzt wird. Dieses geschätzte Signal wird in einem zweiten Schritt durch ein Korrektursignal über den aktuellen Makro-Zeitschritt, das über das Korrektursystem bestimmt wird, zu einem geschätzten modifizierten Signal über den aktuellen Makro-Zeitschritt modifiziert. In einem dritten Schritt werden die beteiligten Teilsysteme über den aktuellen Makro-Schritt unter Verwendung des geschätzten modifizierten Signals gelöst, so dass ein resultierendes Simulationsergebnis über den aktuellen Makro-Zeitschritt erzeugt wird, wobei das Simulationsergebnis das Ergebnis einer Simulation der Koppelgröße darstellt. In einem vierten Schritt wird ein Fehlersignal über den aktuellen Makro-Zeitschritt durch Vergleich zwischen dem geschätzten Signal und dem resultierenden Simulationsergebnis ermittelt. Dieses Fehlersignal dient, nach der Aktualisierung der Makro-Schrittweite im fünften Schritt, in einem sechsten Schritt zur Bestimmung des Korrektursignals über den darauffolgenden Makro-Zeitschritt im zukünftigen Koppelzeitpunkt über das Korrektursystem. Ferner wird diese Prozedur über den darauffolgenden Makro-Zeitschritt wiederholt.

Gemäß einem weiteren beispielhaften Aspekt wird ein Co-Simulationsverfahren für eine nicht-iterative Co-Simulation eines Gesamtsystems mit mehreren Teilsystemen geschaffen, welche an den Schnittstellen jeweils ein Korrektursystem aufweisen, wobei bei der Co-Simulation mehrere Makro-Zeitschritte durchgeführt werden, wobei die Koppelgröße durch ein Extrapolationsverfahren über einen aktuellen Makro-Zeitschritt geschätzt wird und dabei ein geschätztes Signal erzeugt wird. Ferner wird basierend auf dem geschätzten Signal ein resultierendes Simulationsergebnis für den aktuellen Makro-Schritt erzeugt, und durch einen Vergleich zwischen dem geschätzten Signal und dem resultierenden

Simulationsergebnis wird ein Fehlersignal über den aktuellen Makro-Zeitschritt ermittelt.

Gemäß einem weiteren beispielhaften Aspekt wird eine Simulationsvorrichtung für eine nicht-iterative Co-Simulation eines Gesamtsystems geschaffen, wobei bei der Co-Simulation mehrere Makro-Zeitschritte durchgeführt werden, wobei die Simulationsvorrichtung einen Extrapolator aufweist, welcher derart eingerichtet ist, dass er einen Wert einer Koppelgröße durch ein Extrapolationsverfahren über einen aktuellen Makro-Zeitschritt schätzt und dabei ein geschätztes Signal erzeugt. Zusätzlich weist die Simulationsvorrichtung einen Solver auf, in welchem ein Lösungsalgorithmus implementiert ist und welcher derart eingerichtet ist, dass mittels ihm basierend auf dem geschätzten Signal ein resultierendes Simulationsergebnis für den aktuellen Makro-Schritt erzeugt wird. Ferner weist die Simulationsvorrichtung einen Vergleicher auf, der derart eingerichtet ist, dass er einen Vergleich zwischen dem geschätzten Signal und dem resultierenden Simulationsergebnis durchführt und ein Fehlersignal über den aktuellen Makro-Zeitschritt ermittelt. Insbesondere mag die Simulationsvorrichtung eine Mehrzahl von Teilsimulationsvorrichtungen aufweisen, von denen jede einen Solver aufweist. Ferner mag jeder der Teilsimulationsvorrichtungen ein Extrapolator und/oder ein Vergleicher zugeordnet sein.

Insbesondere mag die Simulationsvorrichtung mittels Hardware, Software oder in hybrider Form mit Hardware- und Softwarekomponenten ausgestaltet sein. Beispielsweise mag die Simulationsvorrichtung mittels eines Prozessors oder einen Computers verwirklicht werden.

Insbesondere mag es mittels des beschriebenen Verfahrens möglich sein, die Fehler, welche durch die in der Einleitung beschriebenen Extrapolation eingeführt werden, zu reduzieren. Ferner mag es bei einem Verfahren gemäß einem beispielhaften Aspekt möglich sein, dass keine Meta-Informationen über Teilmodelle vorhanden sein müssen und dass keine Extrapolations- bzw. Schätzmethoden modelliert werden müssen. Auch mag es unnötig sein, dass eine Bewertung der Genauigkeit erfolgt. Insbesondere mag gemäß einem Verfahren ein Schätzfehler zwischen einem Extrapolations- und einem Simulationsresultat für einen aktuellen Makroschritt ermittelt werden. Dieser Schätzfehler mag dann nachfolgend verwendet werden, um die Resultate einer Co-Simulation zu verbessern. Ferner mag dieser Schätzfehler zur Modifikation der Extrapolation über den nächsten Makro-Zeitschritt verwendet werden.

Im Folgenden werden exemplarische Ausführungsbeispiele für das Verfahren bzw. für die Simulationsvorrichtung beschrieben. Die beschriebenen Ausführungsbeispiele einer Kategorie gelten jedoch auch für die Ausgestaltungen der Ausführungsbeispiele der jeweils anderen Kategorie.

Gemäß einem exemplarischen Ausführungsbeispiel weist die Simulationsvorrichtung ferner ein Korrektursystem auf, welches derart eingerichtet ist, dass es ein Korrektursignal basierend auf dem Fehlersignal bestimmt. Insbesondere mag das Korrektursystem einen Integrator, welcher einen Speicher bildet, und/oder einen Realisierungsblock, welcher derart eingerichtet ist, dass er einen Verlauf eines Korrektursignals bestimmt, aufweisen. Ferner mag das Korrektursystem derart eingerichtet sein, dass mittels eines Faktors die Stabilität gewährleistet wird.

Gemäß einem beispielhaften Ausführungsbeispiel des Verfahrens wird ferner ein Korrektursignal berechnet, das über ein Korrektursystem bestimmt wird.

Gemäß einem beispielhaften Ausführungsbeispiel des Verfahrens wird das Korrektursignal dazu verwendet, um das geschätzte Signal zu einem modifizierten Signal zu modifizieren.

Gemäß einem beispielhaften Ausführungsbeispiel des Verfahrens wird das Korrektursignal basierend auf dem Fehlersignal bestimmt.

Gemäß einem beispielhaften Ausführungsbeispiel des Verfahrens werden basierend auf den gegebenen Makro-Schrittweiten direkt die für das Korrektionssystem notwendigen Parameter adaptiv abgeleitet. Die Makro-Schrittweiten werden dabei vom Benutzer oder über eine Makro-Schrittweiten-Steuerung vorgegeben. Dabei einspricht eine Makro-Schrittweiten-Steuerung einem Algorithmus, der die nachfolgend anzuwendende Makro-Schrittweite basierend auf ausgewählten Kriterien, wie Schätzfehler oder Kopplungs-Signaländerung, zur Laufzeit, d.h. während der Durchführung einer Simulation bzw. während der Abarbeitung eines Verfahrens gemäß einem beispielhaften Aspekt, adaptiv festlegt.

Gemäß einem beispielhaften Ausführungsbeispiel des Verfahrens wird basierend auf einem stabilem Korrektursystem der durch die notwendige Extrapolation eingebrachte Fehler in stationären Arbeitspunkten nach transienten Vorgängen des co-simulierten Gesamtsystems zeitlich lokalisiert. D. h. Bereiche, in denen Schätzfehler durch Extrapolation existieren, können somit zeitlich abgegrenzt und einem Abschnitt des Simulationsergebnisses zugeordnet werden.

Gemäß einem beispielhaften Ausführungsbeispiel des Verfahrens kommt das Verfahren insbesondere bei Echtzeit-Anwendungen zum Entschärfen von harten Echtzeitanforderungen zum Einsatz.

Anschaulich beschreibt der beschriebene Aspekt ein Verfahren zur Verminderung des Einflusses des, durch die notwendige Extrapolation eingebrachten Fehlers bei nicht-iterativer Co-Simulation. Bei geeigneter Wahl der Makro-Schrittweiten, im Bezug auf das dynamische Verhalten des Gesamtsystems, kann der Einfluss des Fehlers unabhängig vom verwendeten Extrapolationsverfahren nahezu eliminiert werden. Ist eine Energiebetrachtung zulässig, so wird nahezu die gesamte Energie übertragen. Diese Kompensation erfolgt jeweils über nachfolgende Makro-Zeitschritte und führt zu einer Modifikation der extrapolierten Werte. Die Parametrisierung des Korrektursystems erfolgt, adaptiv im Falle von on-line Makro-Schrittweiten Steuerungen, in Abhängigkeit von der gewählten Makro-Schrittweite und ohne zusätzliche (Meta-) Information. Diese Art der nicht-iterativen Simulator-Kopplung ist neuartig und führt neben der Performancesteigerung der gesamten Co-Simulation zu einer genaueren Abschätzung des Systemverhaltens im Entwicklungsprozess, speziell während transienter Vorgänge.

Ein wesentlicher Vorteil des Verfahrens gemäß einem beispielhaften Aspekt mag die Verminderung und nahezu vollständige Reduktion des Kopplungseinflusses durch die notwendige Extrapolation bei nicht-iterativer Co-Simulation, ohne Verwendung zusätzlicher Informationen, wie z.B. Metainformationen über Teilsysteme.

Im Unterschied zu aus dem Stand der Technik bekannten Verfahren konzentriert sich die vorliegende Erfindung auf ein Verfahren zur Kompensation des Einflusses der notwendigen Extrapolation auf das Systemverhalten und nicht auf die Evaluierung der Co-Simulation.

Ein wesentlicher Gedanke eines beispielhaften Aspektes der Erfindung mag es hierbei sein, dass ein Verfahren zur Simulation eines Gesamtsystems aus einer Mehrzahl von Teilsystemen geschaffen wird, bei welchem ein einmal, beispielsweise mittels eines Extrapolators, geschätztes Signal gespeichert wird und nachfolgend zu der Überprüfung eines berechneten Simulationsergebnisses verwendet wird. Diese Überprüfung oder Verifikation kann beispielsweise durch einen einfachen Vergleich durchgeführt werden. Das Ergebnis des Vergleichs wiederum mag in einem nächsten Makroschritt der Simulation verwendet werden, um die Schätzung für den nächsten Makroschritt zu korrigieren, so dass ein Fehler der Gesamtsimulation verringert werden mag.

### KURZBESCHREIBUNG DER FIGUREN

Fig. 1 zeigt schematisch ein Gesamtsystem für ein Co-Simulationsverfahren.
Fig. 2 zeigt schematisch die Auswirkung einer eingebrachten Störung anhand eines so genannten zero-order-hold Extrapolationsverfahrens.
Fig. 3 zeigt schematisch die Extrapolation des Gesamtsystems der Fig. 1 erweitert um ein Korrektursystem.
Fig. 4 zeigt schematisch ein Beispiel für ein Korrektursystem, wie es in dem Teilausschnitt der Fig. 3 verwendet werden kann.
Fig. 5 zeigt schematisch den Ablauf eines Verfahrens gemäß einen beispielhaften Aspekt.
Fig. 6 zeigt einen beispielhaften Verlauf eines Ergebnisses einer Co-Simulation nach einem Verfahren gemäß einem beispielhaften Aspekt.

### AUSFÜHRLICHE BESCHREIBUNG DER FIGUREN

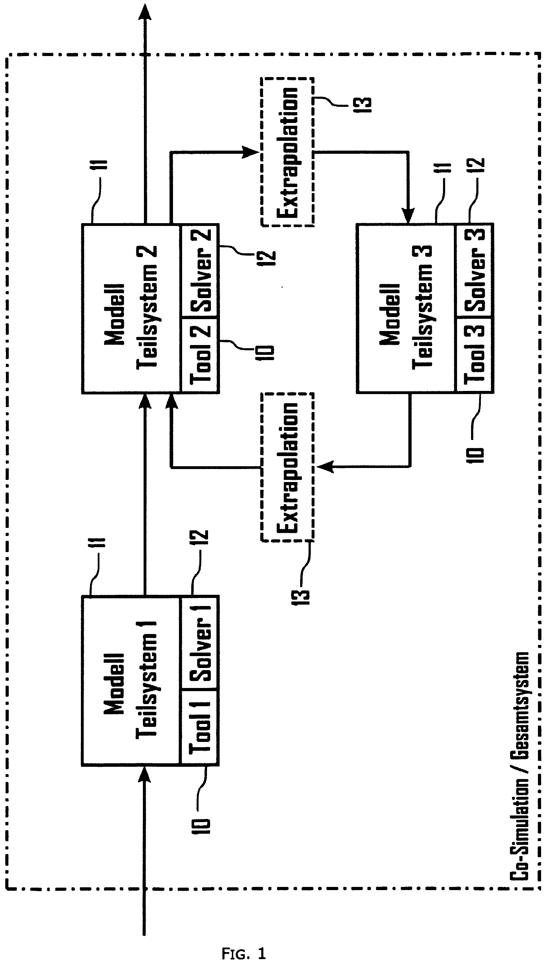

In einer Co-Simulation gemäß einem beispielhaften Aspekt werden modellierte Teilsysteme **11** über die Ein- und Ausgabeparameter der Teilsysteme zu einem Gesamtsystem gekoppelt. Jedes Teilsystem **11** wird jedoch unabhängig von anderen Teilsystemen **11** über den aktuellen Makro-Zeitschritt durch einen eigenen numerischen Lösungsalgorithmus **12** gelöst. In Fig. 1 ist schematisch ein Netzwerk gekoppelter Simulationswerkzeuge (*Tools*) **10** dargestellt, das als Co-Simulation bezeichnet wird. In jedem Simulator **10** ist ein Teilsystem **11** modelliert, das ein spezieller numerischer Lösungsalgorithmus (*Solver*) **12** löst. Bei Netzwerk-internen Schleifen (In Fig. 1 "Teilsystem 2", "Teilsystem 3") entstehen Abhängigkeiten zwischen den involvierten Teilsystemen **11,** sodass je nach Ausführungsreihenfolge - parallel oder seriell - mehr oder weniger Koppelgrößen **31** durch Extrapolationsverfahren **13** über den zu lösenden Makro-Zeitschritt "geschätzt" werden müssen. Diese Extrapolation **13** resultiert in einem, zur Lösung des Gesamtsystems notwendigen, eingebrachten Fehler **32.**

Im Folgenden wird für ein besseres Verständnis die intuitive Betrachtung von Energieflüssen für die Beschreibung der vorliegenden Erfindung verwendet. Für die Anwendung des Kopplungselementes ist es jedoch unerheblich, ob Kopplungssignale **31** als Energieflüsse interpretiert werden können oder nicht. Im Allgemeinen gilt, ein kleiner Fehler führt zu genaueren Resultaten. Hierbei kann der Begriff "Energie" auch in dem Sinne einer verallgemeinerten Form aufgefasst werden, dass ein Produkt aus zwei physikalischen Größen als eine verallgemeinerte Energie aufgefasst werden kann.

### Kopplungsfehler

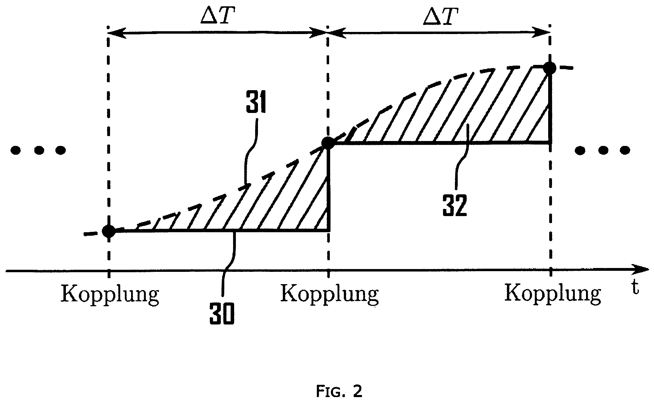

Fig. 2 zeigt exemplarisch die eingebrachte Störung anhand des gewählten ZOH (zero-order-hold) Extrapolationsverfahrens **13** über zwei Makro-Zeitschritte Δ*T*. Die stückweise konstante Stufenfunktion **30** resultiert aus der, zum Lösen des Gesamtsystems notwendigen Extrapolation **13** und entspricht dem geschätzten Verlauf des Koppelsignals. Die Simulation der nachfolgenden Teilsysteme **11** liefert das Simulationsergebnis **31** und dient als Basis für weitere Extrapolationen **13** zu den Kopplungszeitpunkten, wo auch der Datenaustausch zwischen den involvierten Teilsystemen **11** stattfindet. Insbesondere mag das Simulationsergebnis das Ergebnis einer Simulation der des Koppelsignals bzw. der Koppelgröße darstellen, d.h. es mag das Koppelsignal bzw. die Koppelgröße mittels einer Simulation bestimmt werden. Die schraffierten Flächen **32** beschreiben die eingebrachte Störung (Kopplungsfehler), welche sich als Differenz zwischen der geschätzten Stärke des Koppelsignals und dem Simulationsergebnis für den gleichen Makroschritt ergeben kann. Unter Verwendung anderer Extrapolationsmethoden oder - verfahren **13,** wie z.B. FOH (first-order-hold), SOH (second-order-hold) etc., tritt eine ähnliche Form des Fehlers **32** auf und kann auf dieselbe Art und Weise definiert werden. Falls eine Energiebetrachtung zulässig ist und unter der Annahme eines konstanten Verlaufes der zweiten Koppelgröße **31** (nicht dargestellt) wird über diese beiden Makro-Zeitschritte Energie durch die Kopplung dissipiert.

### Energie erhaltende Kopplungsmethodik

Betrachtet man zwei Koppelgrößen **31,** die Energie zwischen zwei Systemen transferieren (wie z.B. in Fig. 1, "Teilsystem 2" und "Teilsystem 3"), so verursacht die Kopplung (Extrapolationsmethode **13**) eine Aufnahme oder Abgabe von Energie und verfälscht das Systemverhalten. Die vorliegende Erfindung ermöglicht eine nahezu vollständige Übertragung der Energie zwischen den Teilsystemen **11** unter kurzzeitiger (Energie-)Speicherung. Wird die Makro-Schrittweite geeignet gewählt, so beeinflusst dieser eingeführte Energiespeicher, den das Korrektursystem **41** repräsentiert, das Systemverhalten nur marginal.

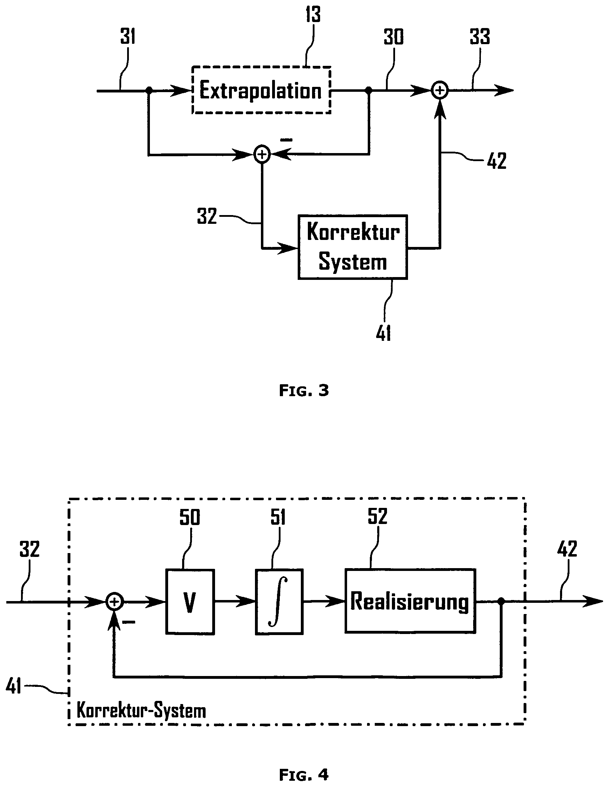

In Fig. 3 ist das prinzipielle Verfahren der nahezu Energie erhaltenden Kopplungsmethodik dargestellt. Unabhängig von verwendeten Extrapolationsmethoden **13** wird der eingebrachte Fehler **32** unter Verwendung der Signale **31** und **30** ermittelt. Basierend auf diesem Fehler **32** wird über ein eingeführtes Korrektursystem **41** ein Korrektursignal **42** bestimmt, das das über das verwendete Extrapolationsverfahren **13** extrapolierte Signal **30** über den nachfolgenden Makro-Zeitschritt modifiziert und in einem Signal **33** resultiert. Eine vollständige Kompensation ist aufgrund der nicht-iterativen Methodik typischerweise nicht möglich und führt somit bei zulässiger Energiebetrachtung auf ein *nahezu* energieerhaltendes Kopplungselement. Betrachtet man mehrere Makro-Zeit-Schritte, so wurde annähernd die vorgesehene Energie übertragen.

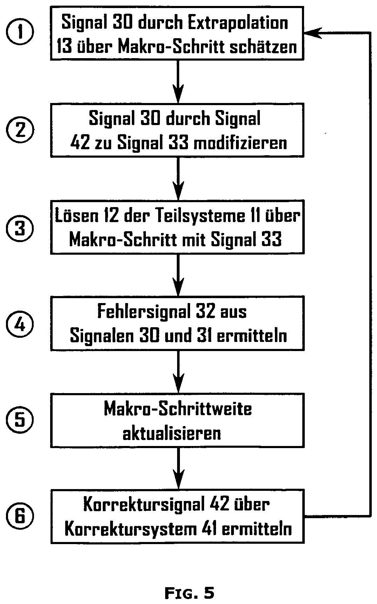

In Fig. 5 stellt ein Ablaufdiagramm die prinzipielle Vorgangsweise für jeden Makro-Schritt dar. In einem Schritt 1 wird die Koppelgröße **31** durch ein Extrapolationsverfahren **13** über den aktuellen Makro-Zeitschritt geschätzt. Dieses geschätzte Signal **30** wird in Schritt 2 basierend auf dem Fehler **32** über den vorher gehenden Makro-Zeitschritt durch ein Korrektursignal **42,** das über das Korrektursystem **41** bestimmt wird, zu einem Signal **33** modifiziert. Schritt 3 beinhaltet das Lösen **12** der beteiligten Teilsysteme **11** über den aktuellen Makro-Schritt unter Verwendung des geschätzten modifizierten Signals **33.** Aus der Gegenüberstellung des extrapolierten Signals **30** mit dem resultierenden Simulationsergebnis **31** kann das Fehlersignal **32** über den aktuellen Makro-Zeitschritt in Schritt 4 ermittelt werden. Schritt 5 beinhaltet im Falle von Makro-Schrittweiten Steuerung die Festlegung der neuen Makro-Schrittweite. Das Fehlersignal **32** dient zur Bestimmung des Korrektursignals **42** über den nächsten Makro-Schritt durch das Korrektursystem **41** in Schritt 6 worauf sich diese Prozedur über den nächsten, darauffolgenden Makro-Zeitschritt wiederholt.

Ein Vorteil dieser Methode betrifft den durch die notwendige Extrapolation **13** eingebrachten Fehler **32.** Falls das Korrektursystem **41** stabil ausgelegt ist, klingt der Fehler über konstante Eingangssignalbereiche ab und ist somit zeitlich lokalisierbar. Über den Fehlerverlauf **32** besteht daher die Möglichkeit, den Fehler **32** zeitlich zu erfassen und in weiterer Folge über eine Metrik zu bewerten.

### Korrektursystem

Das Korrektursystem **41** kann auf verschiedene Art und Weisen ausgelegt werden. Im einfachsten Fall stellt das Korrektursystem **41** ein Totzeitglied dar, das den Fehlerverlauf **32** speichert und um die aktuelle Makro-Schrittweite versetzt. Eine mögliche Struktur des Korrektursystems **41** ist in Fig. 4 dargestellt, wobei der Integrator **51** den Speicher repräsentiert, der Faktor **50** die Stabilität der Schleife gewährleistet und ein Realisierungsblock **52** den Verlauf des Korrektursignals **42** bestimmt.

### Parametrisierung des Korrektur-Systems

Eine Komponente der vorliegenden Erfindung stellt die einfache Parametrisierung des Korrektursystems **41** dar. Der interne Parameter **50** des Korrektur-Systems **41** kann unabhängig von der eingesetzten Extrapolationsmethode **13** und direkt von der aktuellen Makro-Schrittweite abgeleitet werden, sodass Stabilität des nahezu Energie erhaltenden Kopplungselementes garantiert ist. Bei Anwendung einer Makro-Schrittweiten Steuerung werden somit die Parameter des vorliegenden Kopplungselementes adaptiv, mit geringem Berechnungsaufwand, bestimmt.

### Weitere Anwendungsmöglichkeit

Diese Methode kann auch für sog. *soft-real-time* Anwendungen, d.h. Anwendungen wo Teilsysteme in einer vorgegebenen Zeit antworten müssen und es in vereinzelten Fällen zu Zeitüberschreitungen kommt, eingesetzt werden um die Echtzeitanforderung zu entschärfen. Ein Anwendungsgebiet sind HIL (Hardware In the Loop) Anwendungen, wo die Hardware zu festen Zeitpunkten Eingaben fordert, das Simulationstool **10** jedoch in seltenen Fällen, aufgrund von z.B. Interrupts, diese Zeitschranken nicht einhalten kann. Es wird ein Schätzwert **30** zum geforderten Zeitpunkt ermittelt und der dabei aufgetretene Schätzfehler **32** im darauffolgenden Zeitschritt durch das Signal **42** korrigiert.

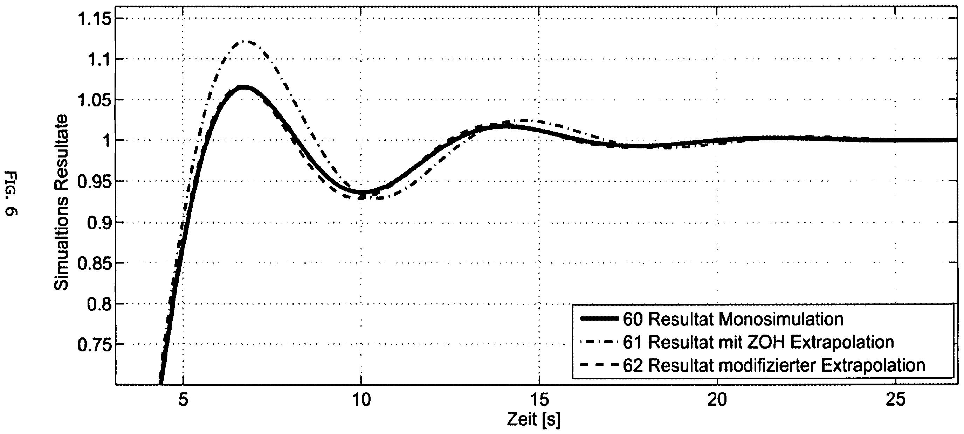

Um das Potential der vorliegenden Erfindung aufzuzeigen ist in Fig. 6 ein Ausschnitt der Verläufe der Co-Simulationsresultate **31** einer Koppelgröße neben der korrekten Lösung **60** dargestellt. Dargestellt ist die Lösung **61** für Standard ZOH (zero-order-hold) Extrapolation **13** und die Lösung der Kopplungsmethodik von vorliegender Erfindung **62.** Neben der wesentlichen Reduktion des Einflusses der Extrapolationsmethodik **13** ist ersichtlich, dass die Lösung **62** anhand der modifizierten Kopplung, mit der korrekten Lösung **60** annähernd übereinstimmt.

Die vorliegende Methode mag den Fehler unter geeigneter Wahl der Makro-Schrittweite führen und mag somit zu aussagekräftigen Ergebnissen von Co-Simulationen führen.

## Patentansprüche

1. Verfahren zur Verminderung des Einflusses des durch notwendige Extrapolation (13) eingebrachten Fehlers (32) für nicht-iterative Co-Simulation eines Gesamtsystems mit mehreren Teilsystemen, welche an den Schnittstellen jeweils ein Korrektursystem aufweisen, wobei bei der Co-Simulation mehrere Makro-Zeitschritte durchgeführt werden, wobei
in einem ersten Schritt zum aktuellen Koppelzeitpunkt aus einer Koppelgröße (31) über den vorherigen Makro-Zeitschritt durch ein Extrapolationsverfahren (13) ein geschätztes Signal (30) über den aktuellen Makro-Zeitschritt erzeugt wird,
dieses geschätzte Signal (30) in einem zweiten Schritt durch ein Korrektursignal (42) über den aktuellen Makro-Zeitschritt, das über ein Korrektursystem (41) bestimmt wird, zu einem geschätzten modifizierten Signal (33) über den aktuellen Makro-Zeitschritt modifiziert wird,
in einem dritten Schritt die beteiligten Teilsysteme (11) über den aktuellen Makro-Schritt unter Verwendung des geschätzten modifizierten Signals (33) gelöst werden, so dass ein resultierendes Simulationsergebnis über den aktuellen Makro-Zeitschritt erzeugt wird, wobei das Simulationsergebnis das Ergebnis einer Simulation der Koppelgröße (31) darstellt,
in einem vierten Schritt ein Fehlersignal (32) über den aktuellen Makro-Zeitschritt durch Vergleich zwischen dem geschätzten Signal (30) und dem resultierenden Simulationsergebnis ermittelt wird,
dieses Fehlersignal (32), nach der Aktualisierung der Makro-Schrittweite im fünften Schritt, in einem sechsten Schritt zur Bestimmung des Korrektursignals (42) über den darauffolgenden Makro-Zeitschritt im zukünftigen Koppelzeitpunkt über das Korrektursystem (41) dient und
sich diese Prozedur über den darauffolgenden Makro-Zeitschritt wiederholt.

2. Verfahren gemäß Anspruch 1, wobei das Korrektursystem (41) ein Totzeitglied darstellt.

3. Verfahren gemäß Anspruch 2, wobei das Korrektursystem (41) den Verlauf des Fehlersignals (32) speichert und um die aktuelle Makro-Schrittweite versetzt.

4. Verfahren gemäß einem der vorangehenden Ansprüche, wobei das Korrektursystem einen Integratorblock (51) zum Speichern, einen Faktorisierungsblock (50) zu Gewährleisten der Stabilität und einen Realisierungsblock (52) zum Bestimmen des Verlaufs des Korrektursignals (42) aufweist.

5. Verfahren gemäß einem der vorangehenden Ansprüche, wobei das modifizierte Signal (33) des aktuellen Zeitschritts als eine Summe des geschätzten Signals (30) des aktuellen Zeitschritts und des Korrektursignals (42) des aktuellen Zeitschritts gebildet wird.

6. Verfahren nach einem der vorangehenden Ansprüche, wobei basierend auf den gegebenen Makro-Schrittweiten direkt die für das Korrektionssystem (41) notwendigen Parameter (50, 51, 52) bei Anwendung von Makro-Schrittweiten Steuerungen adaptiv abgeleitet werden.

7. Verfahren nach einem der vorangehenden Ansprüche, wobei das Fehlersignal (32) zeitlich erfasst wird und in weiterer Folge über eine Metrik bewertet wird.

8. Verfahren nach einem der vorangehenden Ansprüche, **dadurch gekennzeichnet, dass**
das Verfahren bei einer Echtzeit Anwendung zum Entschärfen von harten Echtzeitanforderungen zum Einsatz kommt,
wobei die Anwendung zu festen Zeitpunkten Eingaben fordert,
wobei ein geschätztes Signal (30) zum geforderten aktuellen Zeitpunkt ermittelt wird und der dabei aufgetretene Schätzfehler (32) im darauffolgenden Zeitschritt durch das Korrektursignal (42) korrigiert wird.

9. Co-Simulationsverfahren für eine nicht-iterative Co-Simulation eines Gesamtsystems mit mehreren Teilsystemen, welche an den Schnittstellen jeweils ein Korrektursystem aufweisen, wobei bei der Co-Simulation mehrere Makro-Zeitschritte durchgeführt werden,
wobei das Co-Simulationsverfahren ausgebildet ist, ein Verfahren gemäß einem der vorangehenden Ansprüche auszuführen.

10. Simulationsvorrichtung für eine nicht-iterative Co-Simulation eines Gesamtsystems, wobei bei der Co-Simulation mehrere Makro-Zeitschritte durchgeführt werden, wobei die Simulationsvorrichtung aufweist:
einen Extrapolator, welcher derart eingerichtet ist, dass er die Koppelgröße durch ein Extrapolationsverfahren über einen aktuellen Makro-Zeitschritt schätzt und dabei ein geschätztes Signal erzeugt,
einen Solver, in welchem ein Lösungsalgorithmus implementiert ist und welcher derart eingerichtet ist, dass mittels ihm basierend auf dem geschätzten Signal ein resultierendes Simulationsergebnis für den aktuellen Makro-Schritt erzeugt wird,
einen Vergleicher, der derart eingerichtet ist, dass er einen Vergleich zwischen dem geschätzten Signal und dem resultierenden Simulationsergebnis durchführt und ein Fehlersignal über den aktuellen Makro-Zeitschritt ermittelt; und
ein Korrektursystem, welches derart eingerichtet ist, dass es ein Korrektursignal basierend auf dem Fehlersignal bestimmt,
wobei die Simulationsvorrichtung eingerichtet ist, ein Verfahren nach einem der vorherigen Ansprüche auszuführen.

## Claims

1. Method for reduction of the influence of the error (32), which error has been introduced by a required extrapolation (13), for non-iterative Co-simulation of a complete system with multiple sub-systems which comprise at the interfaces a correction system, respectively,
wherein by the Co-simulation multiple macro-time steps are performed, wherein
in a first step at the ongoing coupling-time point, from a coupling-quantity (31) over a previous macro-time step by an exploration method (13), an estimated signal (30) over the ongoing macro-time step is generated,
this estimated signal (30) is, in a second step, by a correction signal (42) over an ongoing macro-time step, which correction signal is determined by a correction system (41), modified to an estimated modified signal (33) over the ongoing macro-time step,
in a third step the involved sub-systems (11) are solved over the ongoing macro-step by using the estimated modified signals (33) such that a resulting simulation result over the ongoing macro-time step is generated,
wherein the simulation result represents the result of a simulation of the coupling quantity (31),
in a forth step an error signal (32) over the ongoing macro-time step is identified by a comparison between the estimated signal (30) and the resulting simulation result,
this error signal (32), after the update of the macro-step width in the fifth step, serves in a sixth step for the determination of the correction signal (42) over the subsequent macro-time step in the prospective coupling-time point by the correction system (41) and
this procedure repeats itself over the subsequent macro-time step.

2. Method according to claim 1, wherein the correction system (41) represents a dead-time element.

3. Method according to claim 2, wherein the correction system (41) stores the process of the error signal (32) and offsets about the ongoing macro-step width.

4. Method according to any one of the preceding claims, wherein the correction system comprises an integrator block (51) for storing, a factorization block (50) for ensuring the stability, and a realization block (52) for determining the process of the correction signal (42).

5. Method according to any one of the preceding claims, wherein the modified signal (33) of the ongoing time-step is formed as a sum of the estimated signal (30) of the ongoing time-step and the correction signal (42) of the ongoing time-step.

6. Method according to any one of the preceding claims, wherein, based on the given macro-step widths, directly the parameters (50, 51, 52) necessary for the correction system (41) are adaptively derived when applying macro-step widths controllings.

7. Method according to any one of the preceding claims, wherein the error signal (32) is captured chronically and is subsequently assessed by a metric.

8. Method according to any one of the preceding claims,
**characterized in that**
the method is used during a real-time application for mitigating hard real-time requirements,
wherein the application requests inputs at fixed time points,
wherein an estimated signal (30) is identified at the requested ongoing time point and the thereby occurring estimation error (32) is corrected in the subsequent time step by the correction signal (42).

9. Co-simulation method for a non-iterative Co-simulation of a complete system with multiple sub-systems which comprise at the interfaces a correction system, respectively, wherein during the Co-simulation multiple macro-time steps are performed,
wherein the Co-simulation method is designed to perform a method according to any one of the preceding claims.

10. Simulation device for a non-iterative Co-simulation of a complete system, wherein during the Co-simulation multiple macro-time steps are performed, wherein the simulation device comprises:
an extrapolator which is configured such that it estimates the coupling quantity with an extrapolation method over an ongoing macro-time step and thereby generates an estimated signal,
a solver in which a solver algorithm is implemented and which is configured such that by said solver a resulting simulation result is generated for the ongoing macro-step based on the estimated signal,
a comparator which is configured such that it performs a comparison between the estimated signal and the resulting simulation result and identifies an error signal over the ongoing macro-time step; and
a correction system which is configured such that it determines a correction signal based on the error signal,
wherein the simulation device is configured for performing a method according to any one of the preceding claims.

## Revendications

1. Procédé servant à réduire l'impact d'une erreur (32) commise par une extrapolation (13) nécessaire pour une co-simulation non-itérative d'un système global comprenant plusieurs systèmes partiels, qui présentent, au niveau des interfaces, respectivement un système de correction, **caractérisé en ce que** lors de la co-simulation, plusieurs macro-phases chronologiques sont mises en oeuvre,
**en ce que** lors d'une première phase, un signal (30) évalué sur la macro-phase chronologique instantanée est généré au moment de couplage instantané, à partir d'une grandeur de couplage (31) sur la macro-phase chronologique précédente par un procédé d'extrapolation (13),
**en ce que** ledit signal (30) évalué est modifié, lors d'une deuxième phase, par un signal de correction (42) sur la macro-phase chronologique instantanée, lequel est déterminé par l'intermédiaire d'un système de correction (41), en un signal (33) évalué modifié sur la macro-phase chronologique instantanée,
**en ce que** lors d'une troisième phase, les systèmes partiels (11) impliqués sur la macro-phase instantanée sont supprimés en utilisant le signal (33) évalué modifié si bien qu'un résultat de simulation résultant sur la macro-phase chronologique instantanée est généré, lequel résultat de simulation constitue le résultat d'une simulation de la grandeur de couplage (31),
**en ce que** lors d'une quatrième phase, un signal d'erreur (32) sur la macro-phase chronologique instantanée est déterminé par la comparaison entre le signal (30) évalué et le résultat de simulation résultant,
**en ce que** ledit signal d'erreur (32) sert, après mise à jour du macro-incrément lors de la cinquième phase, à définir, lors d'une sixième phase, le signal de correction (42) sur la macro-phase chronologique qui suit, au moment à venir de couplage par l'intermédiaire du système de correction (41), et
**en ce que** ladite procédure se répète sur la macro-phase chronologique qui suit.

2. Procédé selon la revendication 1, **caractérisé en ce que** le système de correction (41) constitue un élément de temps de retard.

3. Procédé selon la revendication 2, **caractérisé en ce que** le système de correction (41) enregistre l'évolution du signal d'erreur (32) et le décale du macro-incrément instantané.

4. Procédé selon l'une quelconque des revendications précédentes, **caractérisé en ce que** le système de correction présente un bloc intégrateur (51) servant à enregistrer, un bloc de factorisation (50) servant à garantir la stabilité et un bloc de réalisation (52) servant à définir l'évolution du signal de correction (42).

5. Procédé selon l'une quelconque des revendications précédentes, **caractérisé en ce que** le signal (33) modifié de la phase chronologique instantanée est obtenu en tant qu'une somme du signal (30) évalué de la phase chronologique instantanée et du signal de correction (42) de la phase chronologique instantanée.

6. Procédé selon l'une quelconque des revendications précédentes, **caractérisé en ce que** les paramètres (50, 51, 52) nécessaires au système de correction (41) sont dérivés de manière adaptative, lors de l'application de commandes de macro-incréments, sur la base des macro-incréments donnés.

7. Procédé selon l'une quelconque des revendications précédentes, **caractérisé en ce que** le signal d'erreur (32) est détecté dans le temps et est analysé par la suite par l'intermédiaire d'une métrique.

8. Procédé selon l'une quelconque des revendications précédentes, **caractérisé en ce**
**que** le procédé est appliqué en temps réel afin de désamorcer des exigences en temps réels les plus strictes,
en ce que l'application à des moments fixes requiert des entrées,
en ce qu'un signal (30) évalué est déterminé au moment instantané requis et l'erreur d'évaluation (32) alors apparue est corrigée par le signal de correction (42) lors de la phase chronologique qui suit.

9. Procédé de co-simulation pour une co-simulation non-itérative d'un système global comprenant plusieurs systèmes partiels, qui présentent au niveau des interfaces respectivement un système de correction, **caractérisé en ce que** lors de la co-simulation plusieurs macro-phases chronologiques sont mises en oeuvre,
**en ce que** le procédé de co-simulation est réalisé afin d'exécuter un procédé selon l'une quelconque des revendications précédentes.

10. Dispositif de simulation pour une co-simulation non-itérative d'un système global, **caractérisé en ce que** lors de la co-simulation, plusieurs macro-phases chronologiques sont mises en oeuvre,
**en ce que** le dispositif de simulation présente :
un extrapolateur, qui est mis au point de telle manière qu'il évalue la grandeur de couplage par un procédé d'extrapolation sur une macro-phase chronologique instantanée et génère alors un signal évalué,
un solveur, dans lequel un algorithme de solution est implémenté et qui est mis au point de telle manière qu'il permet de générer sur la base du signal évalué un résultat de simulation résultant pour la macro-phase instantanée,
un comparateur, qui est mis au point de telle manière qu'il met en oeuvre une comparaison entre le signal évalué et le résultat de simulation résultant et détermine un signal d'erreur sur la macro-phase chronologique instantanée, et
un système de correction, qui est mis au point de telle manière qu'il définit un signal de correction sur la base du signal d'erreur,
**en ce que** le dispositif de simulation est mis au point afin d'exécuter un procédé selon l'une quelconque des revendications précédentes.
